# EUROPEAN PATENT SPECIFICATION

(11) **EP 2 397 937 B1**
(45) Date of publication and mention of the grant of the patent: **10.08.2016**
(21) Application number: 11168843.8
(22) Date of filing: 06.06.2011
(51) Int. Cl.: G06F 9/44

(54) **Personalization using custom gestures**
Personalisierung mithilfe von benutzerdefinierten Gesten
Personnalisation utilisant des gestes personnalisés

(30) Priority: 18.06.2010 US 818640
(43) Date of publication of application: 21.12.2011
(73) Proprietor: Samsung Electronics Co., Ltd., Suwon-si, Gyeonggi-do, 443-742 (KR)
(72) Inventor: Sundararajan, Vinodh, 442-742 Gyeonggi-do (KR)
(74) Representative: Birchenough, Lewis

(56) References cited:
- US-A1- 2010 127 991

## Description

### TECHNICAL FIELD OF THE INVENTION

The present application relates generally to touchscreen capable devices and, more specifically, to a touchscreen capable device that allows users to associate a custom gesture with a behavior in the user environment.

### BACKGROUND OF THE INVENTION

Gestures are an important aspect of user interface in touch based phones. Customizable or open gestures, as they are sometimes referred to, are not available as an integral part of the phone software.

The existing applications for open gestures are limited. For example, some applications are available only as third party applications or add-ons. The user interface, therefore, is inconsistent with applications from other developers and forces the user to learn the application-specific interface and use of the gesture.

In other available implementations, custom gestures cannot be applied to universally on the phone. Rather, the gesture is tied down to particular applications with certain signals. That is, all the custom gestures are only recognized when used in the particular gesture application. This leads to another drawback such that if the user enters a gesture that launches another application, the user has to switch back to the gesture application in order to use another gesture, thereby rendering the convenience of gestures pointless.

Therefore, there is a need in the art for allowing user-defined custom gestu res that can be implemented and recognized universally in a touch-based device a nd across applications.

US 2010/0127991 A1 describes a technique for an electronic device in which a user may implement a specific action by drawing a code shape linked to that action on a touch surface of the device, said shape being a user-defined shape previously not known as such by the electronic device.

### SUMMARY OF THE INVENTION

To address the above-discussed deficiencies of the prior art, a primary object is to provide a novel way of user interaction by affording the end user the freedom to create a custom gesture and deploy it as a desired behavior in the user's environment.

In an embodiment, a personalization component in a touchscreen-enabled apparatus (e.g., mobile station or mobile device) supports custom gestures. The personalization component includes a gesture processor configured to detect whether a user interaction on a touchscreen is one of a set of custom gestures and determine a behavior that is associated with the detected custom gesture, each custom gesture being a user-defined interaction on the touchscreen. The detected custom gesture is defined based on a drawing sequence and the behaviour is associated with a set of operations that are related, but distinguishable based on context.

A personality adapter is configured to select an appropriate operation from a set of operations associated with the behavior based on policies for the behavior. And a behavior repository, stored in a memory, is configured to store the set of custom gestures, associated behaviors, and the policies for the associated behaviors.

The policies determine the selected operation based on at least one of the associated behaviour, the current application and the context of the current application.

In another aspect of the present disclosure, a method for supporting custom gestures in a touch-enabled device is provided. The method includes sensing a user interaction on a touchscreen and detecting whether the sensed user interaction is a custom gesture stored in a behavior repository, the custom gesture being a user-defined interaction on the touchscreen. A behavior that is associated with the custom gesture is determined. An appropriate operation from a set of operations associated with the behavior is selected based on policies for the behavior. And the appropriate operation is executed.

In yet another aspect of the present disclosure, a touchscreen-enabled device is provided. The device includes a touchscreen configured to display a graphical user interface and sense a user interaction. A memory is configured to store core software for the device, the core software comprising a personalization module. A controller is configured to execute the personalization module when the touchscreen senses the user interaction. The personalization module is configured to detect whether the sensed user interaction is one of a set of custom gestures, each custom gesture being a user-defined interaction on the touchscreen, determine a behavior associated with the detected custom gesture, and select an appropriate operation from a set of operations associated with the behavior based on policies for the behavior.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a touchscreen-enabled device according to an embodiment of the present disclosure;
FIGURE 2 illustrates an architecture for supporting custom gestures according to an embodiment of the present disclosure;
FIGURE 3 illustrates a personalization module according to an embodiment of the present disclosure;
FIGURE 4 illustrates a process for creating a new gesture according to an embodiment of the present disclosure; and
FIGURE 5 illustrates a process for detecting a custom gesture according to an embodiment of the present disclosure.

### DETAILED DESCRIPTION OF THE INVENTION

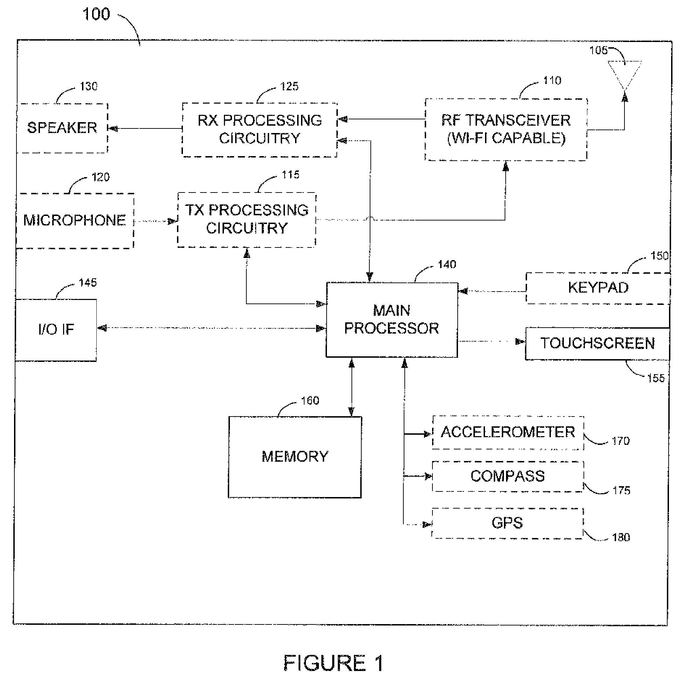

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged touchscreen-enabled device.

Unlike prior art, principles of the present disclosure opens up touch-based devices to a new level of personalization. An aspect of the present disclosure is integrating custom gesture processing into the core software of a device that allows touch-based user input, such that custom gestures are recognized throughout the user environment and across user applications. Another aspect of the present disclosure is to provide an architecture that allows users to associate gestures with behaviors in contrast to associating gestures with applications. Yet another aspect of the present disclosure is to create a user experience that is consistent and scalable. For the purposes of the present disclosure, a custom gesture is defined as a user-defined gesture that is not pre-loaded in software or hardware.

FIGURE 1 illustrates a touchscreen-enabled device according to an embodiment of the present disclosure. Device 100 includes a main processor 140, a memory 160, an input/output (I/O) interface 145, and a touchscreen 155. In addition, device 100 may also include antenna 105, radio frequency (RF) transceiver 110, transmitter (TX) processing circuitry 115, microphone 120, receiver (RX) processor circuitry 125, speaker 130, keypad 150, accelerometer 170, compass 175, and global positioning system (GPS) component 180. The broken lines in FIGURE 1 indicate optional components depending on the capabilities of device 100. The present disclosure is not limited to configuration illustration in FIGURE 1.

Device 100 may be any touchscreen-enabled device, such as a laptop computer, a personal computer with a touchscreen, a tablet device, an electronic reading device, a touchscreen display, a cell phone, a personal digital assistant (PDA) device equipped with a wireless modem, a two-way pager, a personal communication system (PCS) device, or any other type of wireless mobile station.

Main processor 140 may be implemented as a microprocessor or microcontroller. Main processor 140 executes basic operating system (OS) program, platform, firmware, and such, which may be stored in memory 160, in order to control the overall operation of device 100. In one embodiment in which the device is a wireless mobile station, main processor 140 controls the reception of forward channel signals and the transmission of reverse channel signals by RF transceiver 110, RX processing circuitry 125, and TX processing circuitry 115, in accordance with well known principles. Main processor 140 is also capable of controlling and/or interfacing with GPS 180 in order to determine the location of device 100.

Main processor 140 is also capable of executing other processes and programs that are resident in memory 160. Main processor 140 can move data into or out of memory 160, as required by an executing process. Main processor 140 is also coupled to I/O interface 145. I/O interface 145 provides device 100 with the ability to connect to other devices such as laptop computers and handheld computers. I/O interface 145 is the communication path between these accessories and main controller 140.

Main processor 140 is also coupled to touchscreen 155. In some embodiments, main processor 140 may also be coupled to keypad 150. Touchscreen 155 and keypad 150 are used by the end-user of the mobile station to enter data into device 100. Touchscreen 155 is capable of rendering text and/or graphics. Touchscreen 155 may be implemented as a liquid crystal diode (LCD) display, a light emitting diode (LED) display, and such. Alternate embodiments use other types of displays. Touchscreen 155 is the hardware interface with which a user can input custom gestures. In an embodiment, a dedicated area of touchscreen 155 may be dedicated for receiving custom gestures.

Memory 160 is coupled to main processor 140. Memory 160 may be comprised of solid-state memory such as random access memory (RAM), various types of read only memory (ROM), or Flash RAM. Memory 160 may also include other types of memory such as micro-hard drives or removable storage media that stores data. Memory 160 stores the core software that provides the basic operational control of device 100. In an embodiment, memory 160 also stores applications, software components for recognizing custom gestures, and user-defined custom gestures.

In an embodiment, touchscreen 155 detects when a user interaction and sends a raw data representation of the user interaction to main processor 140. Main processor 140 utilizes a personalization module (not illustrated in FIGURE 1) to determine whether the user interaction is a custom gesture stored in memory 160 and processes the user interaction accordingly.

In another embodiment, main processor 140 sends the data representation of the user interaction to a personalization component (not illustrated in FIGURE 1) for processing custom gestures. The personalization component determines whether the user interaction is determined to be a custom gesture and informs main processor 140 of the appropriate action. The personalization component may be integrated into device 100 as a hardware implementation in main processor 140 or as a separate component that interacts with main processor 140.

In some embodiments, device 100 may support wireless communication. For such embodiments, device 100 may also include antenna 105, RF transceiver 110, TX processing circuitry 115, microphone 120, RX processor circuitry 125, and speaker 130. RF transceiver 110 receives, from antenna 105, an incoming RF signal transmitted through a wireless communication network. RF transceiver 110 down-converts the incoming RF signal to produce an intermediate frequency (IF) or a baseband signal. The IF or baseband signal is sent to RX processing circuitry 125 that produces a processed baseband signal by filtering, decoding, and/or digitizing the baseband or IF signal to produce a processed baseband signal. RX processing circuitry 125 transmits the processed baseband signal to speaker 130 (i.e., voice data) or to main processor 140 for further processing (i.e., web browsing).

TX processing circuitry 115 receives analog or digital voice data from microphone 120 or other outgoing baseband data (i.e., web data, e-mail, interactive video game data) from main processor 140. TX processing circuitry 115 encodes, multiplexes, and/or digitizes the outgoing baseband data to produce a processed baseband or IF signal.

RF transceiver 110 receives the outgoing processed baseband or IF signal from TX processing circuitry 115. RF transceiver 110 up-converts the baseband or IF signal to an RF signal that is transmitted via antenna 105.

In some embodiments, device 100 may include location and movement detection features such as accelerometer 170, compass 175, and GPS component 180.

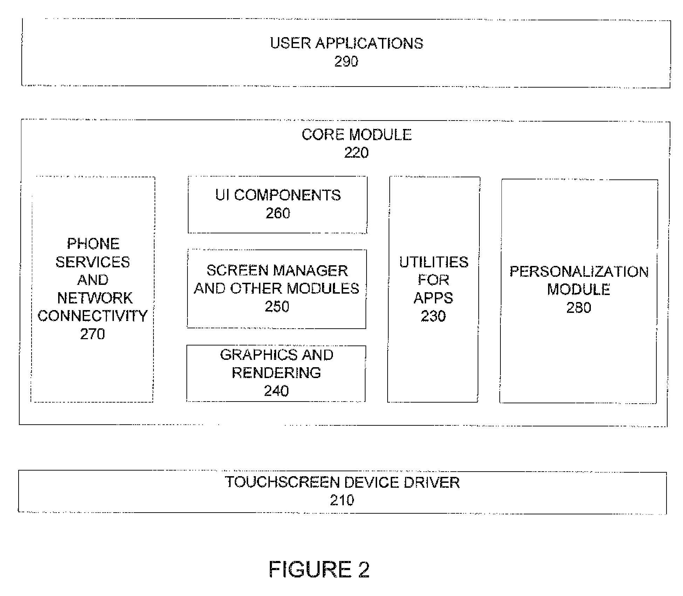

FIGURE 2 illustrates an architecture that supports custom gestures according to an embodiment of the present disclosure. The following discussion will describe the architecture illustrated in FIGURE 2 as an implementation in device 100 for exemplary purposes only. Included in the architecture are touchscreen device driver 210, core module 220, and user applications 290. Touchscreen device driver 210 translates raw inputs related to a user interaction with the touchscreen (e.g. location of the touch interaction, number of simultaneous touch points, touch pressure, and such) into a raw data stream that may be interpreted by core module 220. Core module 220 is configured to manage all the processes that are running on device 100, including processing custom gestures. Core module 220 may be an operating system, a platform, or firmware. User applications 290 include any software, including third party applications, which are separately installed in device 100 and managed by core module 220. Examples of user applications include web browsers, messaging clients, map applications, games, text editors, social networking applications, and such. The architecture, as organized in FIGURE 2 is merely one example of a configuration that supports custom gestures. Core module 220 may be implemented as software stored in a read-only memory (ROM), electrically erasable programmable memory (EEPROM), or flash memory, and executed by processor 140. In other embodiments, one or more of the modules/components of core module 220 may be implemented as separate components or integrated circuits such as field-programmable gate arrays (FPGAs) and application-specific integrated circuits (ASICs).

Core module 220 includes utilities for applications 230, user interface (UI) components 260, screen manager module 250, graphics and rendering module 240, and personalization module 280. In devices that support wireless communication, core module may include phone services and network connectivity tools 270. Utilities for applications 230 include tools and operations that support and manage user applications 290. UI components 260 manage inputs from drivers of various user interface components, such as touchscreen device driver 210, keypad driver (not illustrated), and sound driver (not illustrated). Screen manager and other modules 250 include utilities for managing touchscreen 155 of device 100. Graphics rendering module 240 is employed when additional resources are needed to render advanced graphics and animations. Phone services and network connectivity tools 270 manage voice and data communications for device 100. Personalization module 280 manages and processes all custom gestures entered in the touchscreen device. In particular, personalization module 280 can detect and process custom gestures across all user applications. The action resulting from the custom gesture may vary according to the particular user application or context within the application. Personalization module 280 and custom gestures will be described in more detail in the following paragraphs.

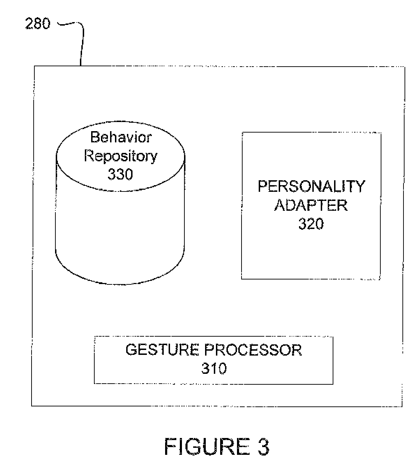

FIGURE 3 illustrates a personalization module according to an embodiment of the present disclosure. For exemplary purposes, the following description will assume that personalization module 280 is implemented in device 100. As shown, personalization module 280 of FIGURE 2 includes gesture processor 310, personality adapter 320, and behavior repository 330. In some embodiments, personalization module 280 and its internal components may be implemented as part of the core software for device 100, such as core module 220, and stored in a memory. In another embodiment, personalization module 280 and any or all of its components may be implemented in an integrated circuit such as an FPGA or an ASIC.

A custom gesture is a user-defined interaction on a touchscreen stored in behavior repository 330 by a user. As mentioned earlier custom gestures are not pre-loaded in software or hardware. For example, a custom gesture may be an alphabet letter 'A', a numeral '3', a punctuation mark '7', a shape, a symbol, and such, drawn on touchscreen 155. A custom gesture may be defined based on a drawing sequence. For example, the number '3' drawn from top to bottom may be one gesture, and the number '3' drawn from bottom to top may be another gesture. A custom gesture may also be defined by the timing, the number of fingers simultaneously touching the touchscreen, the number of strokes (e.g. the letter 'X' consisting of two strokes), or any combination of the above when drawing the custom gesture. Moreover, a custom gesture may also be defined by a combination of custom gestures, such as the letter 'C' followed by the letter 'L'. In contrast, pre-loaded gestures are user interactions that are pre-configured by a manufacturer or software vendor prior to sale. Some examples include flicking a finger vertically or horizontally on a touch screen to invoke a scrolling function.

Gesture processor 310 receives raw data that represents a user interaction on a touchscreen (such as touchscreen 155 of device 100) and determines whether the user interaction is a custom gesture. That is, the gesture processor converts the raw data into a cohesive data representation. For example, gesture processor 310 may determine that the input provided by the user is the equivalent of the letter "C". Gesture processor 310 then determines whether the cohesive data representation is stored in behavior repository 330 as a custom gesture with an associated behavior. Gesture processor 310 also communicates with personality adapter 320 to determine the appropriate operation based on the associated behavior, current application, and/or current application context. In an embodiment, the custom gesture may appear on touchscreen 155 if an appropriate behavior or operation is determined to indicate to the user that a custom gesture has been invoked.

In an embodiment, behavior repository may also include pre-loaded gestures. If behavior repository 330 also includes pre-loaded gestures, gesture processor determines whether the cohesive data representation is a pre-loaded gesture after determining that the cohesive data representation is not a custom gesture and determines the corresponding operation.

Behavior repository 330 stores custom gestures and associates each custom gesture to a behavior. In technical terms, a behavior is associated a class (i.e. set) of operations that are related in some manner but distinguished based on context. That is, each behavior is interpreted execute a particular operation based on the situational context. For example, a custom gesture, letter 'X', may be associated with the behavior, 'stop'. 'Stop' could mean different things in different contexts (i.e. situations). For example, when the device is playing music, 'stop' could mean stop playing music, whereas when the device is in the middle of composing a message in an email application, 'stop' could mean save and exit application. In this example, the behavior 'stop' is associated with a class of operations that include stopping media and exiting an application.

Personality adapter 320 defines policies that associate each behavior with a set of operations and that determine the operation for the detected custom gesture based on at least one of the associated behavior, the current application, and the context of the current application. In essence, personality adapter 320 adds intelligence to a given gesture by acting as a facilitator between gestures, behaviors, and operations. That is, after gesture processor 310 determines the behavior associated to a custom gesture, personality adapter 320 determines the appropriate operation based on the associated behavior and the current situational context.

In an embodiment, personality adapter 320 allows users to create new custom gestures. Personality adapter 320 can present a user interface that allows users to enter a new custom gesture, map the new custom gesture to a behavior, and parse and store this mapping in an internal format that will allow it to execute the corresponding operation. Personality adapter 320 can utilize gesture processor 310 or provide its own search functionality to determine whether or not a proposed new custom gesture is already stored in behavior repository 330.

Personality adapter 320 can also allow a user to create/modify a behavior, define/modify new operations and manage policies for determining how each operation corresponds to the behavior. A policy can be used to manage a set of operations that is associated with a behavior, define a subset of operations that are available for a particular application, and rules for selecting the appropriate operation depending on the user interface that is currently displayed on touchscreen 155. A policy can also be a default or catch-all rule for across all application, in some applications, or in just one application. Alternatively, in some scenarios a custom gesture will invoke an appropriate operation in several contexts but result in no appropriate operation because no policy is defined for that context and no default policy exists.

An operation can be a function within the current application, a system command, an application shortcut, an auto text, a search function, a macro, a script, and such. An operation may also be a combination of individual operations. For example, a gesture 'A' may be associated with a behavior related to looking up a contact named Alex. The policies for Alex behavior may include placing a call to Alex if the phone interface is displayed, launching the new email composing interface with Alex as recipient if the email application is displayed, launching the new text message interface with Alex as recipient if the text messaging application is displayed, and pulling up Alex's contact information in all other situations. Gesture 'T' may be associated with a texting behavior for which a universal policy exists to launch a text messaging application. A user may draw a 'T' to launch the text messaging application, and then draw the custom gesture 'A' which will launch the new text message interface with Alex as the recipient. Alternatively, the user may create a new custom gesture in which letters 'A' and 'T' are drawn within a specified time.

In an embodiment, personality adapter 320 may include pre-loaded behaviors, sets of operations, and operations that cannot be modified or deleted. In some embodiments the pre-loaded behaviors, sets of operations, and operations may be used as building blocks to create new gestures, behaviors, sets of operations, and operations.

Personality adapter 320 may also provide assistance for creating and managing new policies, behaviors, and operation. For example, personality adapter 320 may provide templates for creating new policies, behaviors, and operations. Personality adapter 320 may also advise the user when two conflicting policies have been defined for a behavior or suggest operations that are appropriate for certain contexts. In some embodiments, personality adapter 320 may offer a wizard interface that guides users through the process of creating new behaviors, policies, and operations. As such, personality adapter 320 is a scalable tool that gives the user the ability to create a highly personalized interface

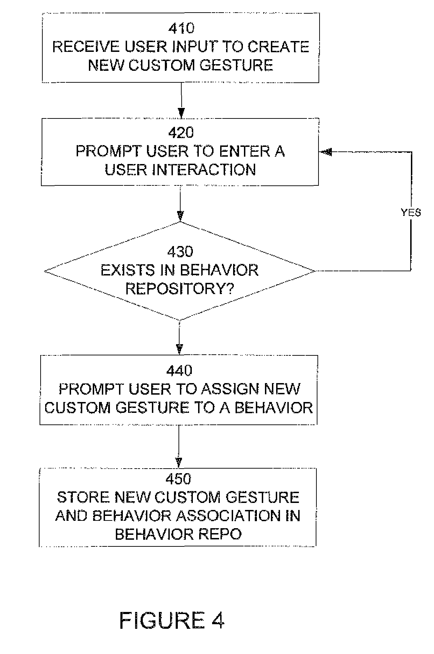

FIGURE 4 illustrates a process for creating a new gesture according to an embodiment of the present disclosure. For exemplary purposes, the present disclosure will describe the process of FIGURE 4 in relation to device 100.

In block 410, device 100 receives user input at touchscreen 155 to create a new custom gesture. A user interface that allows users to enter a new custom gesture is presented on touchscreen 155. In block 420, the user is prompted to enter a user interaction. After the user enters the user interaction, the raw data of the user interaction is converted to a coherent data representation.

In block 430, processor 140 determines whether the user interaction already exists in behavior repository 330. That is, processor 140 determines whether the coherent data representation of the user interaction is already assigned as a custom gesture. This may occur when the user interaction is similar enough to an existing custom gesture that coherent data representations match. In an embodiment, the process of converting to the coherent data representation may be configured such that a user is precluded from creating two custom gestures that may be confused by gesture processor 310. If the custom gesture exists, the user is taken back to block 420 and prompted to enter a user interaction.

If the custom gesture having the same coherent data representation does not exist, the user is prompted to assign the new custom gesture to a behavior in block 440. In some embodiments, the user may be given the option to define a new behavior. If the user chooses to define a new behavior, personalization module 280 may provide an interface for selecting or creating new operations.

Once the new custom gesture is associated to a behavior, in block 450, the new custom gesture and the associated gesture is stored into behavior repository 330. In an embodiment in which device 100 supports multiple users, behavior repository 330 stores custom gestures and their associated behaviors according to user. In some embodiments, users are also allowed to create new behaviors, sets of operations, operations, and policies for determining the corresponding operation based on the context of the situation.

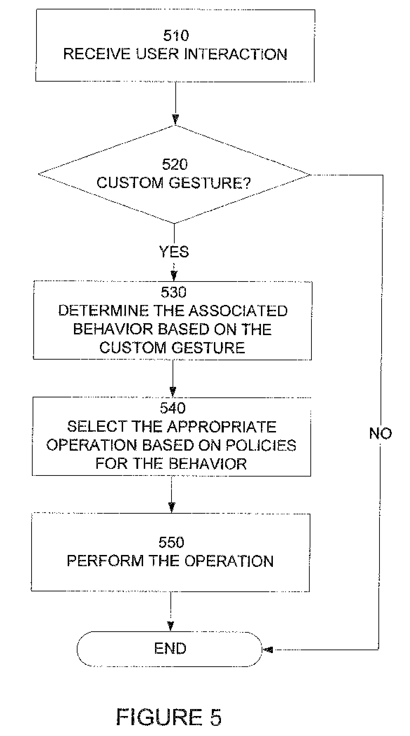

FIGURE 5 illustrates a process for detecting a custom gesture according to an embodiment of the present disclosure. For exemplary purposes, the present disclosure will describe the process of FIGURE 4 in relation to device 100.

When a user interacts with touchscreen 155, main processor 140 sends the raw data stream of the user interaction to personality adapter 280 in block 510. In an embodiment in which personalization module 280 is implemented in the core software of device 100, main processor 140 loads personalization module 280 from memory 160. In block 520, gesture processor 310 of personalization module 280 determines whether the user interaction is a custom gesture. That is, gesture processor 310 converts the raw data stream of the user interaction to a coherent data structure and determines whether the coherent data structure is stored in behavior repository 330.

If the user interaction is not a custom gesture, the process ends. In some embodiments in which personalization module supports pre-loaded gestures, gesture processor 310 determines whether the user interaction is a pre-loaded gesture after determining that the user interaction is not a custom gesture. If the user interaction is a pre-loaded gesture, gesture processor 310 determines the appropriate operation.

If the user interaction is a custom gesture, gesture processor 310 determines the associated behavior based on the custom gesture in block 530. In block 540, gesture processor 310 utilizes personality adapter 320 to determine the appropriate operation based on the context of the situation. Personality adapter 320 determines the appropriate operation by determining the associated set of operations that are associated to the associated behavior, and selecting the appropriate operation from the associated set of operations based on policies regarding the behavior. In block 550, the appropriate operation is executed by main processor 140.

The processes in FIGURES 4 and 5 were described as being executed in device 100 and the architecture illustrated in FIGURE 2. However, both processes may be implemented in any device that supports a touch-based user input and has an architecture that supports personalization such as personalization module 280. Moreover, the present disclosure assumed a device and method having a touchscreen. However, the principles of the present disclosure (i.e. personalization of custom gestures) can also be implemented in any device that has a touch-based user interface separate from the display

Although the present disclosure has been described with an exemplary embodiment, various changes and modifications may be suggested to one skilled in the art. It is intended that the present disclosure encompass such changes and modifications as fall within the scope of the appended claims.

## Claims

1. A personalization component (280) in a touchscreen-enabled device (100) that supports custom gestures, the personalization component (280) comprising:
a gesture processor (310) configured to detect whether a user interaction on a touchscreen (155) is one of a set of custom gestures and determine a behavior that is associated with the detected custom gesture, each custom gesture being a user-defined interaction on the touchscreen (155), wherein the detected custom gesture is defined based on a drawing sequence, wherein the behavior is associated with a set of operations that are related but distinguished based on context;
a personality adapter (320) configured to select an appropriate operation from the set of operations associated with the behavior based on policies for the behavior, wherein the policies determine the selected operation based on at least one of the associated behavior, the current application, and the context of the current application; and
a behavior repository (330) stored in a memory (160), the behavior repository (330) configured to store the set of custom gestures, associated behaviors, and the policies for the associated behaviors.

2. The personalization component of Claim 1, wherein each operation comprises at least one of a function within the current application, a system command, and a shortcut to another application.

3. The personalization component of Claim 1, wherein the gesture processor (310) is further configured to detect the custom gesture irrespective of the current application.

4. The personalization component Claim 1, wherein the personality adapter (320) is further configured to:
manage the policies for the behavior, the policies comprising rules that determine the appropriate operation for the behavior based a context of the current application;
manage the set of operations associated with the behavior; and
manage user-defined operations.

5. The personalization component of Claim 1, wherein the personality adapter (320) is further configured to:
receive a new custom gesture from a user;
associate the new custom gesture to a user-selected behavior; and
store the new custom gesture and the user-selected behavior in the behavior repository.

6. The personalization component of Claim 1, wherein the custom gesture comprises at least one of a movement on the touchscreen (155), a number of fingers touching the touchscreen (155) during the movement, a sequence of the movement, a number of strokes, and a timing of the movement.

7. A method for supporting custom gestures in a touch-enabled device:
sensing a user interaction on a touchscreen (155);
detecting (520) whether the sensed user interaction (510) is a custom gesture stored in a behavior repository (330), the custom gesture being a user-defined interaction on the touchscreen (155);
determining (530) a behavior that is associated with the custom gesture, wherein the detected custom gesture is defined based on a drawing sequence, wherein the behavior is associated with a set of operations that are related but distinguished based on context;
selecting (540) an appropriate operation from the set of operations associated with the behavior based on policies for the behavior, wherein the policies determine the selected operation based on at least one of the associated behavior, the current application, and the context of the current application; and
executing (550) the appropriate operation.

8. The method of Claim 7, wherein detecting (520) whether the sensed user interaction (510) is a custom gesture comprises:
converting a raw data of the sensed user interaction to a coherent data representation; and
determining whether the coherent data representation is stored in a data repository (330).

9. The method of Claim 7, wherein the custom gesture is detected irrespective of the current application.

10. The method of Claim 7, further comprising:
managing the policies for the behavior, the policies comprising rules that determine the appropriate operation for the behavior based a context of the current application;
managing the set of operations associated with the behavior; and
managing user-defined operations.

11. The method of Claim 7, further comprising:
learning a new custom gesture when receiving user input to create the new custom gesture, comprising:
prompting (420) a user to enter a user interaction,
prompting (440) the user to assign the new custom gesture to a user-selected behavior upon confirming that the user interaction is not stored in the behavior repository (330), and
storing (450) the new custom gesture and the assigned behavior in the behavior repository (330).

12. The method Claim 7, wherein the custom gesture comprises at least one of a movement on the touchscreen (155), a number of fingers touching the touchscreen (155) during the movement, a sequence of the movement, a number of strokes and a timing of the movement.

13. A touchscreen-enabled device (100), comprising:
a touchscreen (155) configured to display a graphical user interface and sense a user interaction;
a memory (160) configured to store a core software for the device, the core software comprising a personalization module (280); and
a controller (140) configured to execute the personalization module (280) when the touchscreen (155) senses the user interaction, personalization module (280) configured to:
detect whether the sensed user interaction is one of a set of custom gestures, each custom gesture being a user-defined interaction on the touchscreen (155),
determine a behavior associated with the detected custom gesture, wherein the detected custom gesture is defined based on a drawing sequence, wherein the behavior is associated with a set of operations that are related but distinguished based on context, and
select an appropriate operation from the set of operations associated with the behavior based on policies for the behavior, wherein the policies determine the selected operation based on at least one of the associated behavior, the current application, and the context of the current application.

14. The device of Claim 13, wherein the memory (160) is further configured to store a behavior repository (330) comprising the set of custom gestures, associated behaviors, and the policies for each behavior.

15. The device of Claim 13, wherein the controller (140) is further configured to execute the personalization module irrespective of the current application.

16. The device of Claim 13, wherein the personalization module (280) is further configured to:
manage the policies for the behavior, the policies comprising rules that determine the appropriate operation for the behavior based a context of the current application;
manage the set of operations associated with the behavior; and
manage user-defined operations.

17. The device Claim 13, wherein the personalization module (280) is further configured to learn a new custom gesture when user input to create the new custom gesture is received, comprising:
prompting a user to enter a user interaction;
prompting the user to assign the new custom gesture a user-selected behavior upon confirming that the that the user interaction is not stored in the behavior repository (330); and
storing the new custom gesture and the user-selected behavior in the behavior repository (330).

18. The device of Claim 13 , wherein the custom gesture comprises at least one of a movement on the touchscreen (155), a number of fingers touching the touchscreen (155) during the movement, a sequence of the movement, a number of strokes, and a timing of the movement.

## Patentansprüche

1. Personalisierungskomponente (280) in einer touchscreen-fähigen Vorrichtung (100), die benutzerdefinierte Gesten unterstützt, wobei die Personalisierungskomponente (280) umfasst:
einen Gestenprozessor (310), der konfiguriert ist, zu detektieren, ob eine Benutzerinteraktion auf einem Touchscreen (155) eine aus einem Satz von benutzerdefinierten Gesten ist und ein Verhalten zu ermitteln, das mit der detektierten benutzerdefinierten Geste assoziiert ist, wobei jede benutzerdefinierte Geste eine benutzerdefinierte Interaktion auf dem Touchscreen (155) ist, wobei die detektierte benutzerdefinierte Geste auf der Basis einer Zeichnungssequenz definiert ist, wobei das Verhalten mit einem Satz von Operationen assoziiert ist, die verwandt, aber auf der Basis von Kontext unterschieden werden;
einen Persönlichkeitsadapter (320), der konfiguriert ist, eine geeignete Operation aus dem Satz von Operationen zu selektieren, die mit dem Verhalten assoziiert sind, das auf Richtlinien für das Verhalten basiert, wobei die Richtlinien die selektierte Operation auf wenigstens einem der folgenden Punkte basierend, nämlich dem assoziierten Verhalten, der aktuellen Anwendung bzw. dem Kontext der aktuellen Anwendung bestimmen; und
ein Verhaltens-Repository (330), das in einem Speicher (160) gespeichert ist, wobei das Verhaltens-Repository (330) konfiguriert ist, den Satz von benutzerdefinierten Gesten, assoziierten Verhaltensweisen und die Richtlinien für die assoziierten Verhaltensweisen zu speichern.

2. Personalisierungskomponente nach Anspruch 1, wobei jede Operation wenigstens eine einer Funktion innerhalb der aktuellen Anwendung, eines Systembefehls und einer Verknüpfung zu einer weiteren Anwendung umfasst.

3. Personalisierungskomponente nach Anspruch 1, wobei der Gestenprozessor (310) ferner konfiguriert ist, die benutzerdefinierte Geste ungeachtet der aktuellen Anwendung zu detektieren.

4. Personalisierungskomponente nach Anspruch 1, wobei der Persönlichkeitsadapter (320) ferner für Folgendes konfiguriert ist:
Managen der Richtlinien für das Verhalten, der Richtlinien, die Regeln umfassen, welche die geeignete Operation für das Verhalten auf einem Kontext der aktuellen Anwendung basierend bestimmen;
Managen des Satzes von Operationen, die mit dem Verhalten assoziiert sind; und Managen benutzerdefinierter Operationen.

5. Personalisierungskomponente nach Anspruch 1, wobei der Persönlichkeitsadapter (320) ferner für Folgendes konfiguriert ist:
Empfangen einer neuen benutzerdefinierten Geste von einem Benutzer;
Assoziieren einer neuen benutzerdefinierten Geste mit einem vom Benutzer selektiertem Verhalten; und
Speichern der neuen benutzerdefinierten Geste und dem vom Benutzer selektierten Verhalten im Verhaltens-Repository.

6. Personalisierungskomponente nach Anspruch 1, wobei die benutzerdefinierte Geste wenigstens eine einer Bewegung auf dem Touchscreen (155), einer Anzahl von Fingern, die den Touchscreen (155) während der Bewegung berühren, eine Sequenz der Bewegung, eine Anzahl von Hüben und ein Timing der Bewegung umfasst.

7. Verfahren zur Unterstützung benutzerdefinierter Gesten in einer touchfähigen Vorrichtung: Abtasten einer Benutzer-Interaktion auf einem Touchscreen (155);
Detektieren (520), ob die abgetastete Benutzer-Interaktion (510) eine benutzerdefinierte Geste ist, die in einem Verhaltens-Repository (330) gespeichert ist, wobei die benutzerdefinierte Geste eine benutzerdefinierte Interaktion auf dem Touchscreen (155) ist; Bestimmen (530) eines Verhaltens, das mit der benutzerdefinierten Geste assoziiert ist, wobei die detektierte benutzerdefinierte Geste auf einer Zeichnungssequenz basierend definiert ist, wobei das Verhalten mit einem Satz von Operationen assoziiert ist, die verwandt, aber auf Kontext basierend unterschieden werden;
Selektieren (540) einer geeigneten Operation aus dem Satz von Operationen, die mit dem Verhalten assoziiert ist, das auf Richtlinien für das Verhalten basiert, wobei die Richtlinien die selektierte Operation auf wenigstens einem der folgernden Punkte basierend, nämlich dem assoziierten Verhalten, der aktuellen Anwendung bzw. dem Kontext der aktuellen Anwendung bestimmen.

8. Verfahren nach Anspruch 7, wobei das Detektieren (520), ob die abgetastete Benutzer-Interaktion (510) eine benutzerdefinierte Geste ist, umfasst:
Umwandeln von Rohdaten der abgetasteten Benutzer-Interaktion in eine kohärente Datenrepräsentation; und
Bestimmen, ob die kohärente Datenrepräsentation in einem Daten-Repository (330) gespeichert ist.

9. Verfahren nach Anspruch 7, wobei die benutzerdefinierte Geste ungeachtet der aktuellen Anwendung detektiert wird.

10. Verfahren nach Anspruch 7, ferner umfassend:
Managen der Richtlinien für das Verhalten, der Richtlinien, die Regeln umfassen, welche die geeignete Operation für das Verhalten auf einem Kontext der aktuellen Anwendung basierend bestimmen;
Managen des Satzes von Operationen, die mit dem Verhalten assoziiert sind; und
Managen benutzerdefinierter Operationen.

11. Verfahren nach Anspruch 7, ferner umfassend:
Lernen einer neuen benutzerdefinierten Geste, wenn Benutzereingabe empfangen wird, um die neue benutzerdefinierte Geste zu erschaffen, umfassend:
Veranlassen (420), dass ein Benutzer eine Benutzer-Interaktion eingibt,
Veranlassen (440), dass der Benutzer die neue benutzerdefinierte Geste einem vom Benutzer selektierten Verhalten nach der Bestätigung zuordnet, dass die Benutzer-Interaktion nicht im Verhaltens-Repository (330) gespeichert ist, und
Speichern (450) der neuen benutzerdefinierten Geste und des zugeordneten Verhaltens im Verhaltens-Repository (330).

12. Verfahren nach Anspruch 7, wobei die benutzerdefinierte Geste wenigstens eine einer Bewegung auf dem Touchscreen (155), einer Anzahl von Fingern, die den Touchscreen (155) während der Bewegung berühren, einer Sequenz der Bewegung, eine Anzahl von Hüben und ein Timing der Bewegung umfasst.

13. Touchscreen-fähige Vorrichtung (100), umfassend:
einen Touchscreen (155), der konfiguriert ist, eine grafische Benutzerschnittstelle anzuzeigen und eine Benutzer-Interaktion abzutasten;
einen Speicher (160), der konfiguriert ist, eine Core-Software für die Vorrichtung zu speichern, wobei die Core-Software ein Personalisierungsmodul (280) umfasst; und
eine Steuereinheit (140), die konfiguriert ist, das Personalisierungsmodul (280) ablaufen zu lassen, wenn der Touchscreen (155) die Benutzer-Interaktion abtastet, wobei das Personalisierungsmodul (280) für Folgendes konfiguriert ist:
Detektieren, ob die abgetastete Benutzer-Interaktion eine eines Satzes von benutzerdefinierten Gesten ist, wobei jede benutzerdefinierte Geste eine benutzerdefinierte Geste auf dem Touchscreen (155) ist,
Bestimmen eines Verhaltens, das mit der detektierten benutzerdefinierten Geste assoziiert ist, wobei die detektierte benutzerdefinierte Geste auf einer Zeichnungssequenz basierend definiert ist, wobei das Verhalten mit einem Satz von Operationen assoziiert ist, die verwandt sind, aber auf Kontext basierend unterschieden werden, und
Selektieren einer geeigneten Operation aus dem Satz von Operationen, die mit dem Verhalten assoziiert sind, das auf Richtlinien für das Verhalten basiert, wobei die Richtlinien die selektierte Operation auf wenigstens einem der folgenden Punkte basierend, nämlich dem assoziierten Verhalten, der aktuellen Anwendung bzw. dem Kontext der aktuellen Anwendung bestimmen.

14. Vorrichtung nach Anspruch 13, wobei der Speicher (160) ferner konfiguriert ist, ein Verhaltens-Repository (330) zu speichern, das den Satz von benutzerdefinierten Gesten, assoziierte Verhaltensweisen und die Richtlinien für jedes Verhalten umfasst.

15. Vorrichtung nach Anspruch 13, wobei die Steuereinheit (140) ferner konfiguriert ist, ungeachtet der aktuellen Anwendung, das Personalisierungsmodul ablaufen zu lassen.

16. Vorrichtung nach Anspruch 13, wobei das Personalisierungsmodul (280) ferner für Folgendes konfiguriert ist:
Managen der Richtlinien für das Verhalten, der Richtlinien, die Regeln umfassen, welche die geeignete Operation für das Verhalten auf einem Kontext der aktuellen Anwendung basierend bestimmen;
Managen des Satzes von Operationen, die mit dem Verhalten assoziiert sind; und
Managen benutzerdefinierter Operationen.

17. Vorrichtung nach Anspruch 13, wobei das Personalisierungsmodul (280) ferner konfiguriert ist, eine neu benutzerdefinierte Geste zu lernen, wenn Benutzereingabe zur Erschaffung der neuen benutzerdefinierten Geste empfangen wird, umfassend:
Veranlassen, dass ein Benutzer eine Benutzer-Interaktion eingibt,
Veranlassen, dass der Benutzer die neue benutzerdefinierte Geste einem vom Benutzer selektierten Verhalten nach der Bestätigung zuordnet, dass die Benutzer-Interaktion nicht im Verhaltens-Repository (330) gespeichert ist, und
Speichern der neuen benutzerdefinierten Geste und dem vom Benutzer selektierten Verhalten im Verhaltens-Repository (330).

18. Vorrichtung nach Anspruch 13, wobei die benutzerdefinierte Geste wenigstens eine einer Bewegung auf dem Touchscreen (155), einer Anzahl von Fingern, die den Touchscreen (155) während der Bewegung berühren, einer Sequenz der Bewegung, einer Anzahl von Hüben und ein Timing der Bewegung umfasst.

## Revendications

1. Un composant de personnalisation (280) dans un dispositif à écran tactile (100) qui prend en charge des gestes personnalisés, le composant de personnalisation (280) comprenant :
un processeur de gestes (310) configuré de façon à détecter si une interaction d'utilisateur sur un écran tactile (155) est un geste d'un ensemble de gestes personnalisés et à déterminer un comportement qui est associé au geste personnalisé détecté, chaque geste personnalisé étant une interaction définie par l'utilisateur sur l'écran tactile (155), où le geste personnalisé détecté est défini en fonction d'une séquence de tracé, où le comportement est associé à un ensemble d'opérations qui sont reliées mais distinguées en fonction d'un contexte,
un adaptateur de personnalité (320) configuré de façon à sélectionner une opération appropriée de l'ensemble d'opérations associées au comportement en fonction de règles pour le comportement, où les règles déterminent l'opération sélectionnée en fonction d'au moins un élément parmi le comportement associé, l'application courante et le contexte de l'application courante, et
un référentiel de comportements (330) conservé dans une mémoire (160), le référentiel de comportements (330) étant configuré de façon à conserver en mémoire l'ensemble de gestes personnalisés, des comportements associés et les règles pour les comportements associés.

2. Le composant de personnalisation selon la Revendication 1, où chaque opération comprend au moins un élément parmi une fonction à l'intérieur de l'application courante, une commande système et un raccourci vers une autre application.

3. Le composant de personnalisation selon la Revendication 1, où le processeur de gestes (310) est configuré en outre de façon à détecter le geste personnalisé indépendamment de l'application courante.

4. Le composant de personnalisation selon la Revendication 1, où l'adaptateur de personnalité (320) est configuré en outre de façon à :
gérer les règles pour le comportement, les règles comprenant des règles qui déterminent l'opération appropriée pour le comportement en fonction d'un contexte de l'application courante,
gérer l'ensemble d'opérations associées au comportement, et
gérer des opérations définies par l'utilisateur.

5. Le composant de personnalisation selon la Revendication 1, où l'adaptateur de personnalité (320) est configuré en outre de façon à :
recevoir un nouveau geste personnalisé à partir d'un utilisateur,
associer le nouveau geste personnalisé à un comportement sélectionné par l'utilisateur, et
conserver en mémoire le nouveau geste personnalisé et le comportement sélectionné par l'utilisateur dans le référentiel de comportements.

6. Le composant de personnalisation selon la Revendication 1, où le geste personnalisé comprend au moins un élément parmi un déplacement sur l'écran tactile (155), un nombre de doigts touchant l'écran tactile (155) au cours du déplacement, une séquence du déplacement, un nombre de traits et un moment du déplacement.

7. Un procédé de prise en charge de gestes personnalisés dans un dispositif tactile comprenant :
la détection d'une interaction d'utilisateur sur un écran tactile (155),
la détection (520) si l'interaction d'utilisateur détectée (510) est un geste personnalisé conservé en mémoire dans un référentiel de comportements (330), le geste personnalisé étant une interaction définie par l'utilisateur sur l'écran tactile (155),
la détermination (530) d'un comportement qui est associé au geste personnalisé, où le geste personnalisé détecté est défini en fonction d'une séquence de tracé, où le comportement est associé à un ensemble d'opérations qui sont reliées mais distinguées en fonction d'un contexte,
la sélection (540) d'une opération appropriée dans l'ensemble d'opérations associées au comportement en fonction de règles pour le comportement, où les règles déterminent l'opération sélectionnée en fonction d'au moins un élément parmi le comportement associé, l'application courante, et le contexte de l'application courante, et
l'exécution (550) de l'opération appropriée.

8. Le procédé selon la Revendication 7, où la détection (520) si l'interaction d'utilisateur détectée (510) est un geste personnalisé comprend :
la conversion de données brutes de l'interaction d'utilisateur détectée en une représentation de données cohérente, et
la détermination si la représentation de données cohérente est conservée en mémoire dans un référentiel de données (330).

9. Le procédé selon la Revendication 7, où le geste personnalisé est détecté indépendamment de l'application courante.

10. Le procédé selon la Revendication 7, comprenant en outre :
la gestion des règles pour le comportement, les règles comprenant des règles qui déterminent l'opération appropriée pour le comportement en fonction d'un contexte de l'application courante,
la gestion de l'ensemble d'opérations associées au comportement, et
la gestion d'opérations définies par l'utilisateur.

11. Le procédé selon la Revendication 7, comprenant en outre :
l'apprentissage d'un nouveau geste personnalisé lors de la réception d'une entrée utilisateur de façon à créer le nouveau geste personnalisé, comprenant :
la sollicitation (420) d'un utilisateur à entrer une interaction d'utilisateur,
la sollicitation (440) de l'utilisateur à attribuer le nouveau geste personnalisé à un comportement sélectionné par l'utilisateur après confirmation que l'interaction d'utilisateur n'est pas conservée en mémoire dans le référentiel de comportements (330), et
la conservation en mémoire (450) du nouveau geste personnalisé et du comportement attribué dans le référentiel de comportements (330).

12. Le procédé selon la Revendication 7, où le geste personnalisé comprend au moins un élément parmi un déplacement sur l'écran tactile (155), un nombre de doigts touchant l'écran tactile (155) au cours du déplacement, une séquence du déplacement, un nombre de traits et un moment du déplacement.

13. Un dispositif à écran tactile (100), comprenant :
un écran tactile (155) configuré de façon à afficher une interface utilisateur graphique et à détecter une interaction d'utilisateur,
une mémoire (160) configurée de façon à conserver en mémoire un logiciel noyau pour le dispositif, le logiciel noyau comprenant un module de personnalisation (280), et
un dispositif de commande (140) configuré de façon à exécuter le module de personnalisation (280) lorsque l'écran tactile (155) détecte l'interaction d'utilisateur, le module de personnalisation (280) étant configuré de façon à :
détecter si l'interaction d'utilisateur détectée est un geste d'un ensemble de gestes personnalisés, chaque geste personnalisé étant une interaction définie par l'utilisateur sur l'écran tactile (155),
déterminer un comportement associé au geste personnalisé détecté, où le geste personnalisé détecté est défini en fonction d'une séquence de tracé, où le comportement est associé à un ensemble d'opérations qui sont reliées mais distinguées en fonction d'un contexte, et
sélectionner une opération appropriée dans l'ensemble d'opérations associées au comportement en fonction de règles pour le comportement, où les règles déterminent l'opération sélectionnée en fonction d'au moins un élément parmi le comportement associé, l'application courante et le contexte de l'application courante.

14. Le dispositif selon la Revendication 13, où la mémoire (160) est configurée en outre de façon à conserver en mémoire un référentiel de comportements (330) comprenant l'ensemble de gestes personnalisés, des comportements associés et les règles pour chaque comportement.

15. Le dispositif selon la Revendication 13, où le dispositif de commande (140) est configuré en outre de façon à exécuter le module de personnalisation indépendamment de l'application courante.

16. Le dispositif selon la Revendication 13, où le module de personnalisation (280) est configuré en outre de façon à :
gérer les règles pour le comportement, les règles comprenant des règles qui déterminent l'opération appropriée pour le comportement en fonction d'un contexte de l'application courante,
gérer l'ensemble d'opérations associées au comportement, et
gérer des opérations définies par l'utilisateur.

17. Le dispositif selon la Revendication 13, où le module de personnalisation (280) est configuré en outre de façon à apprendre un nouveau geste personnalisé lorsque une entrée utilisateur destinée à la création du nouveau geste personnalisé est reçue, comprenant :
la sollicitation d'un utilisateur à entrer une interaction d'utilisateur,
la sollicitation de l'utilisateur à attribuer le nouveau geste personnalisé à un comportement sélectionné par l'utilisateur après confirmation que l'interaction d'utilisateur n'est pas conservée en mémoire dans le référentiel de comportements (330), et
la conservation en mémoire du nouveau geste personnalisé et du comportement sélectionné par l'utilisateur dans le référentiel de comportements (330).

18. Le dispositif selon la Revendication 13, où le geste personnalisé comprend au moins un élément parmi un déplacement sur l'écran tactile (155), un nombre de doigts touchant l'écran tactile (155) au cours du déplacement, une séquence du déplacement, un nombre de traits et un moment du déplacement.
